Europäisches Patentamt

European Patent Office

Office européen des brevets

(19)

(11) Veröffentlichungsnummer: **0 102 375**
**B1**

(12) EUROPÄISCHE PATENTSCHRIFT

(45) Veröffentlichungstag der Patentschrift:
**26.08.87**

(51) Int. Cl.⁴: **B 23 B 29/22**, B 23 B 29/04

(21) Anmeldenummer: **83900902.4**

(22) Anmeldetag: **08.03.83**

(86) Internationale Anmeldenummer:
**PCT/DE 83/00039**

(87) Internationale Veröffentlichungsnummer:
**WO 83/03215 (29.09.83** Gazette 83/23)

(54) **FASSUNG UND HALTERUNG FÜR DREHMASCHINENWERKZEUGE.**

(30) Priorität: **12.03.82 DE 3208923**

(43) Veröffentlichungstag der Anmeldung:
**14.03.84 Patentblatt 84/11**

(45) Bekanntmachung des Hinweises auf die Patenterteilung:
**26.08.87 Patentblatt 87/35**

(84) Benannte Vertragsstaaten:
**AT BE CH DE FR GB LI LU NL SE**

(56) Entgegenhaltungen:
**BE - A - 338 682**
**CH - A - 177 319**
**DE - C - 314 168**
**FR - A - 404 096**
**FR - A - 932 962**
**FR - A - 1 237 216**
**GB - A - 477 807**

(73) Patentinhaber: **MÜNTEL, Bruno, Hoiersdorfer Strasse 4,
D-3338 Schöningen (DE)**

(72) Erfinder: **MÜNTEL, Bruno, Hoiersdorfer Strasse 4,
D-3338 Schöningen (DE)**

(74) Vertreter: **Lins, Edgar, Dipl.-Phys. et al, Patentanwälte
Gramm + Lins Theodor-Heuss-Strasse 2,
D-3300 Braunschweig (DE)**

## Beschreibung

Die Erfindung betrifft eine Halterung für Drehmaschinenwerkzeuge mit einem Spannkopf und einer das Werkzeug mit die Arbeitshöhe des Werkzeugs bestimmenden Plattenstapel aufnehmenden, einstückigen Hülse, die durch den Spannkopf gehalten wird.

Das Einrichten der Werkzeuge an solchen Drehmaschinen, nämlich die Höheneinstellung der Schneiden und das Ausrichten der spanenden Werkzeuge, wie der Drehmeisel, Bohrstangen und Ähnlichen, wie auch das Ausrichten nichtspanender Werkzeuge, wie Rändelwerkzeuge oder Druckrollen musste bisher unmittelbar an der stehenden Maschine selbst und mit hohem Zeitaufwand vom Facharbeiter durchgeführt werden. Die Stillstandszeiten und die Einrichtezeit schlug dabei um so stärker zu Buche, je kleiner die zu fertigende Stückzahl war, und erreichten ein Maximum bei der Einzelstückfertigung, beispielsweise im Werkzeugbau. Besonders nachteilig wirkt es sich aus, wenn bei der Bearbeitung eines Werkstücks ein mehrmaliger Werkzeugwechsel notwendig war. An die wirtschaftliche Fertigung kleiner Serien war dabei kaum zu denken. Hier blieb nur der Weg über Revolver-Drehmaschinen oder Drehautomaten gangbar, bei denen alle Werkzeuge fest eingerichtet und nacheinander in die Arbeitsstellung umgeschaltet werden. Bei diesen Maschinen sind die absoluten Einrichtezeiten beträchtlich höher, als die Einrichte- und Wechselzeiten an den gebräuchlichen Support-Drehmaschinen, die Wechselzeiten reduzieren sich jedoch auf Sekunden, und Stillstandzeiten der Maschine beim Wechseln entfallen ganz. Die anteiligen Einrichtekosten verteilen sich jedoch auf grosse Stückzahlen und die Lohnkosten reduzieren sich beträchtlich, weil für die Bedienung von Revolverdrehmaschinen angelernte Kräfte zugezogen werden können, und die Bedienung von Automaten ˑh auf die Beaufsichtigung mehrerer Maschinen beschränkt. Bei regelmässigem Anfall von kleinen Drehteilserien, die auf Revolver-Drehmaschinen gefertigt werden, etwa Ersatzteilen, besteht natürlich die Möglichkeit, die bestückten Revolverköpfe auf Lager zu nehmen und bei Bedarf korrekt einzusetzen und eine erneute volle Einrichtung zu sparen; dem stehen allerdings höhere Investitionskosten gegenüber. Ausserdem ist vorausgesetzt, dass der Betrieb überhaupt über diese Maschinen verfügt.

Der Schwerpunkt des Einrichtens liegt bei den gebräuchlichen Support-Drehmaschinen in der Höheneinstellung der Schneide des spanenden Werkzeugs bzw. der Rändel- oder Kordierrollengabel oder des Druck- oder Bördelrollenhalters. Zu diesem Zweck werden die vierkantigen Schäfte der Drehmeisel oder Halter mit Unterlegplatten auf dem Support aufgelegt und ausgerichtet, bis die erforderliche Höhe erreicht ist, dann in der Horizontalen ausgerichtet und gemeinsam mittels Mutterschrauben und Schraubenschlüssel festgespannt. Anzahl und Dicke der Unterlegplatten bestimmen die Schneiden- oder Werkzeughöhe.

Beim Werkzeugwechsel geht die Einstellung verloren, mit Ausnahme des Höhenmasses, vorausgesetzt, der Unterlegplattenstapel wird unverändert mit dem Werkzeug eingelagert – Werkzeuge, etwa Bohrstangen mit kreisrundem Schaftquerschnitt können dabei unter Zuhilfenahme eines Prismenpaares befestigt werden. Das Einrichten und Umrüsten der Drehmaschine wird dabei jedoch nur geringfügig erleichtert und beschleunigt; auch eine Nachmessung der Einstellung an der Maschine ist kaum entbehrlich.

Durch die FR-A 1 237 216 ist eine Hülse bekannt, die das Werkzeug und den Plattenstapel aufnimmt und in einen Spannkopf einspannbar ist. Die Hülse hat dabei die Aufgabe, die Anordnung aus Plattenstapel und Werkzeug mechanisch zusammenzuhalten, damit diese Anordnung als Einheit in dem Spannkopf verspannbar ist, wodurch die Festlegung des Werkzeugs innerhalb des Plattenstapels erfolgt. Durch die Hülse können Werkzeug und Plattenstapel in gewisser Weise vorbereitet werden, um bei einem Werkzeugwechsel in dem Spannkopf verspannt zu werden, die genaue Arbeitshöhe stellt sich jedoch hierbei erst durch das Verspannen in dem Spannkopf ein. Die die Platten des Plattenstapels und den Plattenstapel mit dem Werkzeug zusammendrückende Kraft ist bei diesen Hülsen ausserordentlich gering.

Der Erfindung liegt die Aufgabe zugrunde, eine Halterung der eingangs erwähnten Art für Drehmaschinenwerkzeuge zu erstellen, die eine genaue Vorbereitung der Werkzeuge und auch deren vielfältige Handhabung ausserhalb der Spanneinrichtung ermöglicht.

Diese Aufgabe wird in einer ersten Alternative dadurch gelöst, dass die Hülse geschlossen und quaderförmig mit ebenen Seitenwänden ausgebildet ist, die die Höhe der Hülse festlegen, und dass die Hülse von der Oberseite aus zugängliche Schrauben aufweist, die eine die Bearbeitung des Werkzeugs erlaubende Spannkraft zur Festlegung der Plattenstapel mit dem Werkzeug erzeugen.

In dieser bevorzugten Alternative lässt sich die Spannkraft durch die Schrauben variieren.

In einer zweiten Lösung wird die oben erwähnte Aufgabe dadurch gelöst, dass die Hülse quaderförmig mit ebenen Seitenwänden ausgebildet ist, die die Höhe der Hülse festlegen, dass die Hülse wenigstens einen Längsschlitz aufweist, durch die wenigstens eine Seitenwand der Hülse elastisch dehnbar ist, und dass das Werkzeug und der Plattenstapel in die Hülse bei gedehnter Seitenwand eingesetzt sind und die Rückstellkraft der Seitenwand eine die Bearbeitung des Werkzeugs erlaubende Spannkraft zur Festlegung der Plattenstapel mit dem Werkzeug erzeugt.

Durch die erfindungsgemässen Lösungen wird ein Handhabungssystem geschaffen, durch das die an der Drehmaschine benötigten Werkzeuge vorbereitet und verspannt in der Hülse gelagert werden können und somit ohne neue Einrichtungsarbeiten einsetzbar sind. Die Werkzeugeinheit ist auch z.B. beim Nachschleifen des Werkzeugs als Einheit handhabbar, ohne dass dadurch die Einstellung verändert würde. Das Werkzeug wird in der Hülse vorjustiert und verspannt aufbewahrt und kann in dieser Form in üblicher Weise gehandhabt werden.

Besonders vorteilhaft ist es, wenn die Hülse aus ferromagnetisch weichem Material gebildet ist und in den Spannkopf an einer ebenen Anlagefläche anliegend eingesetzt wird, wobei sich in der Anlagefläche flächenbündig eingesetzte Magnete befinden. Der schnelle Werkzeugwechsel wird dabei erleichtert, indem die Hülse sofort an die Anlagefläche magnetisch gezogen wird. Dort bleibt sie auch magnetisch befestigt, wenn der Spannkopf noch keine Spannkraft ausübt und beispielsweise gedreht wird.

Die Erfindung soll im folgenden anhand von in der Zeichnung dargestellten Ausführungsbeispielen näher erläutert werden. Es zeigen:

Figur 1 eine perspektivische Ansicht auf ein mit einem Plattenstapel in einer Hülse verspanntes Werkzeug, wobei die Spannkraft durch in die Hülse eingedrehte Schrauben erzeugt wird

Figur 2 eine Variante der Hülse gemäss Figur 1

Figur 3 einen vergrösserten Schnitt entlang der Linie III-III in Figur 2

Figur 4 eine Hülse mit einem Dehnschlitz in einer Seitenwand

Figur 5 einen Spannkopf mit eingesetzten bestückten Hülsen, die zwei einseitig offene Längsschlitze auf jeder Seitenwand aufweisen

Figur 6 eine Darstellung der Teile des Spannkopfes mit in die Anlageflächen flächenbündig eingesetzten Magneten

Figur 7 eine Darstellung eines Spreizwerkzeuges zum Spreizen der Hülsenwände gemäss Figur 4 oder 5

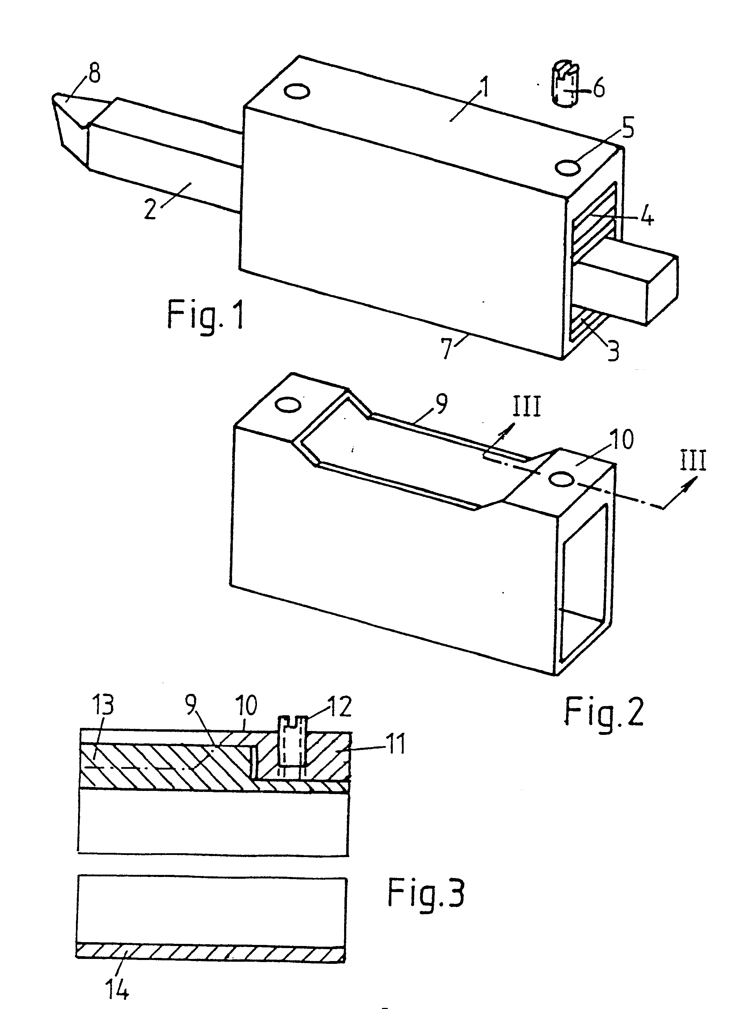

Figur 1 zeigt eine an beiden Stirnenden offene quaderförmige Hülse 1 mit einem rechteckigen Innenquerschnitt, dessen Breite die Schaftbreite eines grössten in Frage kommenden Werkzeugs 2 überschreiten muss. In die Hülse 1 ist der Schaft des Werkzeugs 2 sowie Unterlegplatten 3 eingesteckt. Der Hohlraum oberhalb des Werkzeugs 2 ist mit weiteren Platten 4 ausgefüllt. Die Platten 3 und 4 bilden einen Plattenstapel, der zusammen mit dem Werkzeug 2 die Hülse 1 in voller Länge und Breite ausfüllt. Die Plattenstapel 3, 4 wird mit dem Werkzeug 2 durch in die Gewindelöcher 5 auf der Oberseite der Hülse 1 eingeführte Schrauben 6 verspannt. Die Länge der als Madenschrauben ausgebildeten Schrauben 6 ist so bemessen, dass sie ganz in den Bohrungen verschwinden. Die Hülse 1 mit dem Werkzeug 2 kann nun wie ein Schaftwerkzeug gehandhabt werden, also auf den Support einer Drehmaschine aufgespannt werden. Die Höheneinstellung des Werkzeugs wird nicht geändert, solange das Werkzeug 2 in der Hülse 1 verbleibt. Auch beim Nachschleifen kann das Werkzeug 2 in der Hülse 1 verbleiben. Ist durch das Nachschleifen selbst eine Höhenänderung zu erwarten, kann dies durch Nachlegen einer Unterlegplatte 3 berücksichtigt werden.

Bei der Ausführungsform nach Figur 2 ist die Oberfläche der Hülse 1 mit einer Durchbrechung 9 versehen, durch die die Supportspannung unmittelbar auf den Plattenstapel 3, 4 mit dem Werkzeug 2 wirken kann. Die Enden 11 der Oberwand 10 sind mit Rücksicht auf eine ausreichende Einschraubtiefe der Schrauben 12 verstärkt. Dabei kann auch die obere Platte 13 des Plattenstapels 3, 4 in der Mitte verstärkt und an den Enden stufenförmig abgeflacht sein, so dass die Oberfläche der Platte 13 mit der Oberwand 10 der Hülse 1 praktisch fluchtet. Diese Bauart erlaubt die Verwendung dünnen Wandmaterials für die Hülse 1, weil die Seitenwände nicht belastet werden, sondern die Einspannkraft unmittelbar über den Plattenstapel 3, 4 mit dem eingespannten Werkzeug 2 auf den Boden 12 übertragen wird.

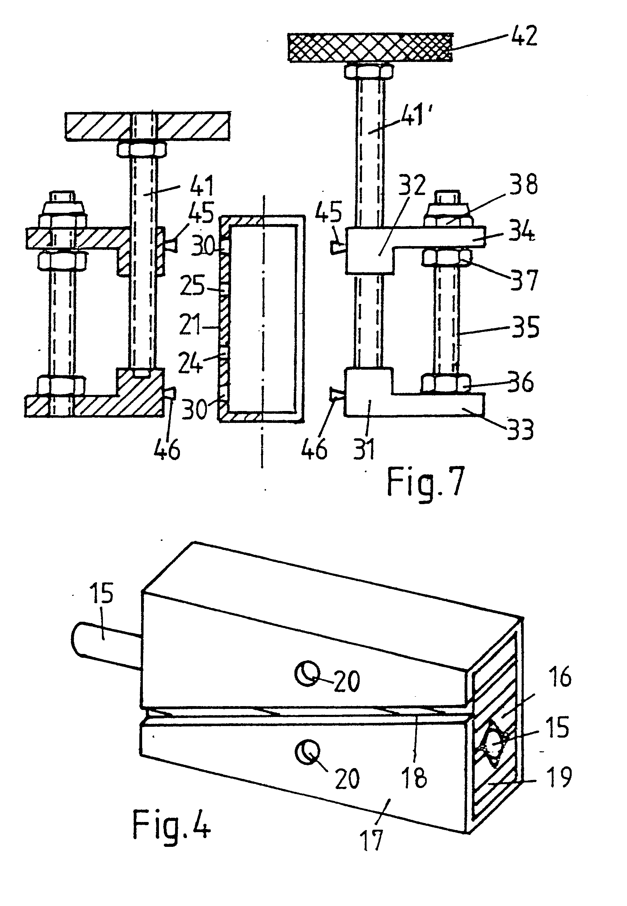

In der in Figur 4 dargestellten Ausführungsform ist ein runder Werkzeugschaft 15 in an sich bekannter Weise mit Hilfe eines Prismenpaares 16 eingespannt. Eine Seitenwand 17 der Hülse ist mit einem durchgehenden Schlitz 18 aufgeschnitten. Der Schlitz 18 ist zweckmässig schräg, also etwa diagonal geführt, um das Herausrutschen dünner Unterlegplatten 19 zu verhindern. Zum Bestücken muss der Schlitz 18 dieser Hülse gespreizt werden. Nach dem Einschieben des Werkzeugs 2 bzw. 15 und der Platten 19, 16 wird die Spreizung aufgehoben, wodurch die Fassung zurückfedert und das Paket festhält. Das Aufspreizen kann vorzugsweise durch eine Schraubzwinge mit zwei Stiften bewirkt werden, die in Bohrungen 20 beiderseits des Schlitzes 18 eingeführt werden. Eine geeignete Vorrichtung zum Aufspreizen des Schlitzes 18 wird anhand der Figur 7 noch näher erläutert.

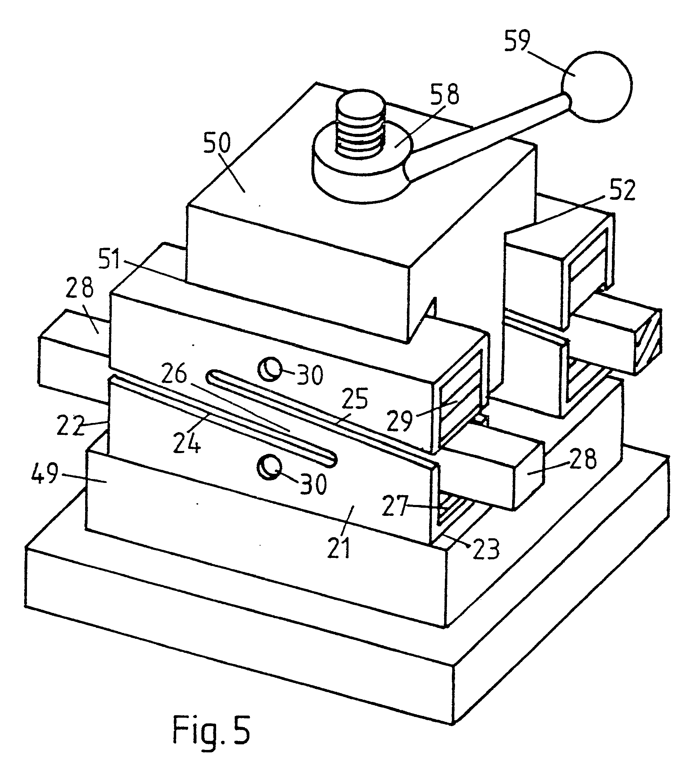

In Figur 5 ist eine weitere Ausführungsform der Hülse zusammen mit einem Supportspannkopf 50 dargestellt. Eine vollkommen symmetrische Aufweitung der Hülse in der Höhe und eine gleichförmige Spannung wird dadurch erreicht, dass die Seitenwände 21 mit an den Stirnseiten 22, 23 offenen, nicht durchlaufenden und sich etwa über zwei Drittel der Wandlängen erstreckenden schrägen Schlitzpaaren 24, 25 versehen sind. Der Materialsteg 26 zwischen den Schlitzen 24, 25 wirkt wie eine beiderseitig eingespannte Feder und gestattet trotz geringer Wandstärken der Seitenwände 21 die Erzeugung einer hohen Spannkraft für das Zusammenpressen des Stapels aus Werkzeug 28 und Platten 27, 29. Bohrungen 30 oberhalb und unterhalb der Schlitze 24, 25 gestatten das Ansetzen einer Spreizvorrichtung zur Vorbereitung des Herausnehmens oder Einschiebens des Stapels 27, 28, 29. Da der Aufweitehub der Hülse nur wenige Zehntel Millimeter beträgt, wird die Elastizitätsgrenze bei der Verbiegung des Steges 26 zwischen den Schlitzen 24, 25 nicht überschritten.

Die hohe und zuverlässige Spannung der Hülse erlaubt auch die sichere Halterung von Werkzeugschäften, die wesentlich kürzer als die Hülse sind. Damit ergibt sich auch die Möglichkeit, in einer Hülse gleichzeitig zwei Werkzeuge sicher unterzubringen und auf diese Weise Hülsen einzusparen oder den Werkzeugwechsel an der Maschine zu beschleunigen.

In Figur 7 ist eine Spreizvorrichtung für die Hülsen dargestellt. Zwei Köpfe 31, 32 mit Flanschen 33, 34 sind durch eine Schraubspindel 35 miteinander verbunden. Die Spindel 35 ist mit dem einen Ende in den Flansch 33 geschraubt und durch eine Mutter 36 gesichert. Der andere Flansch 34 ist mit einer Bohrung auf die Spindel 35 aufgesteckt. Mit Hilfe von Muttern 37, 38 kann der Abstand zwischen den beiden Flanschen 34, 35 fest eingestellt werden. Die Köpfe 31, 32 tragen Zapfen 45, 46, die in Bohrungen 20, 30 der Fassungen eingesteckt werden können. Eine mit einem Drehknopf 42 versehene weitere Schraubspindel 41 ist durch eine Gewindebohrung des oberen Kopfes 32 hindurchgeschraubt und stützt sich auf dem unteren Kopf 31 ab. Die Vorrichtung wird nach dem Lösen der Muttern 37, 38 so eingestellt, dass die Zapfen 45, 46 genau im Achsabstand der Bohrungspaare 20, 30 stehen. Dann werden die Muttern wieder angezogen. Wird die Vorrichtung mit den Zapfen 44, 45 in die Bohrungen 20 bzw. 30 gesteckt, kann durch Drehen des Spindelkopfes 42 die gewünschte Spreizung bewirkt, d.h. die Hülse aufgeweitet werden. Nach den Arbeiten an der Hülse wird der Spindelkopf 42 zurückgedreht und die Spreizvorrichtung abgenommen. Bei dem beschriebenen Aufbau wird die Spindel 35 auf Biegung beansprucht, wenn gespannt wird. Das hat den Vorteil, dass der genaue Zapfenabstand beim Einsetzen und Herausnehmen leichter einstellbar ist.

Bei der Anwendung dieser Spannvorrichtung auf die beiderseitig geschlitzten Hülsen nach Figur 5 sind zwei gleiche Vorrichtungen erforderlich, die jedoch so an der Hülse angesetzt werden müssen, dass sie die Aufstellung auf einer Richtplatte nicht behindern. Deswegen ist eine Spindel 41' so weit verlängert, dass die Handhabung der beiden Knöpfe 42 nicht behindert wird.

Die Zapfen 45, 46 sind vorzugsweise mit dem grösseren Durchmesser nach aussen konisch, um ein Abgleiten beim Spannen zu vermeiden. Eine noch grössere Sicherheit wird erreicht, wenn auch die Bohrungen 20, 30 nach innen konisch aufgeweitet werden.

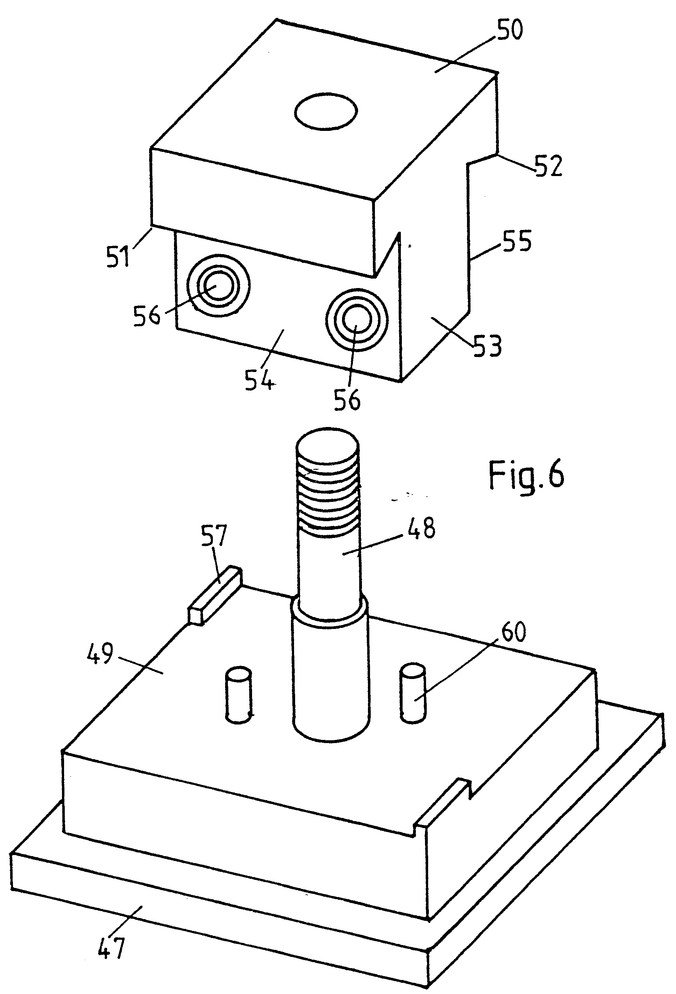

Die Figuren 5 und 6 zeigen die Verwendung der erfindungsgemässen Hülsen mit einer Schnellspann-Vorrichtung. Diese besteht im wesentlichen aus einem T-förmigen, auf einen Supportdorn 48 der Drehmaschine aufsteckbaren Spannkopf 50. Die unteren äusseren Kanten des Flansches sind hinterschnitten, so dass zwei lange parallele Auflagekanten 51, 52 gebildet werden. Die Länge des Spannkopfes 50 und der Auflagekanten 51, 52 ist von der Länge der einzuspannenden Hülsen unabhängig. Das Spannen selbst erfolgt durch eine mit einem Griffhebel 59 verbundene Dornmutter 58. Auf diese Weise können die Hülsen sicher eingespannt werden, ohne ihre Oberfläche zu beschädigen. Das sichere Einspannen wird auch nicht beeinträchtigt, wenn flachere oder dickere Hülsen verwendet werden, wenn die Auflagekanten 51, 52 also nicht in der Symmetrieebene auf den Hülsen aufliegen.

Seitliche Anlageflächen 54, 55 des Spannkopfes 50 sind zur Sicherung der Anlage der Hülsenwände mit Permanent- oder Elektromagneten bestückt, beispielsweise mit eingelassenen Topfmagneten 56, die so bemessen sind, dass die Werkzeughülsen an den Anlageflächen 54, 55 haften, jedoch durch ihr Eigengewicht auf die Supportplatte 49 heruntergleiten und auch manuell horizontal verschoben werden können. Bei Bewegungen des Spannkopfes 50 beim Entspannen oder Spannen bleibt auf diese Weise die Lage der Fassungen unbeeinflusst.

Zwischen Supportplatte 49 und Spannkopf 50 kann auf den Dorn 48 eine Schrauben-Druckfeder aufgesteckt sein, die den Spannkopf 50 beim Lösen so weit anhebt, dass ein freier Zugang zu den Hülsen entsteht.

Auch kann auf den Dorn 48 eine Platte 49 aufgesteckt sein, die als eigentliche Aufspannplatte dient und Führungsstifte 60 trägt, die eine gegenseitige Verdrehung des Spannkopfes 50 und der Platte 49 verhindern. Nach Lösen der Spannmutter 58 lässt sich der Spannkopf 50 mit den Werkzeugen und der Platte 49 um den Dorn 48 drehen, ohne dass die Lage der Werkzeuge beeinflusst wird. In jedem Fall ist immer nur ein Spannhebel 59 zu betätigen.

Auf der Supportplatte 49 können noch zusätzliche feste oder auswechselbare Anschläge 57 angeordnet sein, um die Hülsen in Längsrichtung festzulegen. In gewissen Grenzen kann der Spannkopf 50 auf dem Dorn 48 auch pendelnd mit Spiel geführt werden. In diesem Fall wird die untere Berührungsfläche der Spannmutter 58 ballig ausgebildet. Dadurch können Höhenunterschiede der beiden Hülsen ohne Beeinträchtigung der festen Einspannung selbsttätig ausgeglichen werden.

**Patentansprüche**

1. Halterung für Drehmaschinenwerkzeuge (2, 28) mit einem Spannkopf (50) und einer das Werkzeug (2, 28) mit die Arbeitshöhe des Werkzeugs bestimmenden Plattenstapeln (3, 4) aufnehmenden, einstückigen Hülse (1), die durch den Spannkopf (50) gehalten wird, dadurch gekennzeichnet, dass die Hülse (1) geschlossen und quaderförmig mit ebenen Seitenwänden (7) ausgebildet ist, die die Höhe der Hülse (1) festlegen, und dass die Hülse (1) von der Oberseite aus zugängliche Schrauben (5, 6, 12) aufweist, die eine die Bearbeitung des Werkzeugs (2, 28) erlaubende Spannkraft zur Festlegung der Plattenstapel (4) mit dem Werkzeug (2, 28) erzeugen.

2. Halterung für Drehmaschinenwerkzeuge (2, 28) mit einem Spannkopf (50) und einer das Werkzeug (2, 28) mit die Arbeitshöhe des Werkzeugs bestimmenden Plattenstapeln (3, 4) aufnehmenden, einstückigen Hülse (1), die durch den Spannkopf (50) gehalten wird, dadurch gekennzeichnet, dass die Hülse quaderförmig mit ebenen Seitenwänden (7) ausgebildet ist, die die Höhe der Hülse (1) festlegen, dass die Hülse (1) wenigstens einen Längsschlitz (18, 24, 25) aufweist, durch die wenigstens eine Seitenwand (21) der Hülse (1) elastisch dehnbar ist, und dass das Werkzeug (2, 28) und Plattenstapel (3, 4) in die Hülse (1) bei gedehnter Seitenwand (21) eingesetzt sind und die Rückstellkraft der Seitenwand (21) eine die Bearbeitung des Werkzeugs (2, 28) erlaubende Spannkraft zur Festlegung der Plattenstapel (4) mit dem Werkzeug (2, 28) erzeugt.

3. Halterung nach Anspruch 2, dadurch gekennzeichnet, dass der Längsschlitz (18, 24, 25) zu einer Stirnseite (22, 23) hin offen ist.

4. Halterung nach Anspruch 2 oder 3, dadurch gekennzeichnet, dass der Schlitz (24, 25) in einem spitzen Winkel zur Längsachse der Fassung ausgerichtet ist.

5. Halterung nach einem der Ansprüche 2 bis 4, gekennzeichnet durch Öffnungen (30) in der Wand (21) beiderseits des Längsschlitzes (24, 25) für den Eingriff von entgegen der Ausziehrichtung kegelig geformten Zapfen (45, 46) eines äusseren Spreizwerkzeugs.

6. Halterung nach Anspruch 5, dadurch gekennzeichnet, dass auch die Öffnungen (30) entgegen ihrer Ausziehrichtung kegelig ausgeführt sind.

7. Halterung nach einem der Ansprüche 1 bis 6, dadurch gekennzeichnet, dass die Hülse (1) aus ferromagnetisch weichem Material gebildet ist und dass in Anlageflächen (54) des Spannkopfes (50) Magnete (56) flächenbündig eingesetzt sind.

**Claims**

1. Holder for lathe tools (2, 28) comprising a clamping head (50) and a single-piece holder sleeve (1) being held by the clamping head (50) and housing plate stacks (3, 4) which determine the working height of the tool, characterized in that the sleeve (1) is constructed with closed and orthogonal plane side walls (7) which determine the height of the sleeve (1), and that the sleeve (1) is provided with screws (5, 6, 12) being operable from the top of the sleeve and producing a clamping force for fixing the plate stack (4) together with the tool (2, 28), said clamping force allowing the machining of the tool (2, 28).

2. Holder for lathe tools (2, 28) comprising a clamping head (50) and a single-piece holder sleeve (1), being held by the clamping head (50) and housing plate stacks (3, 4) which determine the working height of the tool, characterized in that the sleeve (1) is constructed with orthogonal plane side walls (7), which determine the height of the sleeve (1), that the sleeve (1) is provided with at least one longitudinal slot (18, 24, 25) by which at least one side wall (21) of the sleeve (1) is elastically spreadable, and that said tool (2, 28) and said plate stack (3, 4) is inserted into the sleeve (1) when the side wall (21) is spreaded and the restoring force of the side wall (21) produces a clamping force for fixing the plate stack (4) together with the tool (2, 28) said clamping force allowing the machining of the tool (2, 28).

3. Holder according to claim 2, characterized in that the longitudinal slot (18, 24, 25) is open to one end face (22, 23).

4. Holder according to claim 2 or 3, characterized in that the slot (24, 25) is orientated under an acute angle with respect to the longitudinal axis of the sleeve (1).

5. Holder according to one of the claims 1 to 4, characterized by holes (30) provided in the wall (21) on both sides of the longitudinal slot, said holes (30) serving for the insertion of posts (45, 46) of an external spreading tool, said posts are conically expanded opposite to their removal direction.

6. Holder according to claim 5, characterized in that also the holes (30) are conically expanded opposite to the removal direction.

7. Holder according to one of the claims 1 to 6, characterized in that the sleeve (1) consists of a ferro-magnetically soft material and that magnets (56) are inserted flush with contact surfaces (54) of the clamping head (50).

**Revendications**

1. Fixation pour outils de tour (2, 28), comportant une tête de bridage (50) et une cage (1), d'une pièce, qui reçoit l'outil (2, 28) ainsi que des piles de plaques (3, 4) définissant la hauteur de travail de l'outil et qui est maintenue par la tête de bridage (50), caractérisée en ce que la cage (1) est conçue fermée et de forme parallélépipédique avec des parois latérales planes (7) qui déterminent la hauteur de la cage (1); et en ce que la cage (1) présente des vis (5, 6, 12) qui sont accessibles depuis la face supérieure et qui produisent, pour bloquer les piles de plaques (4) avec l'outil (2, 28), une force de bridage permettant d'usiner l'outil (2, 28).

2. Fixation pour outils de tour (2, 28) comportant une tête de bridage (50) et une cage (1), d'une pièce, qui reçoit l'outil (2, 28) ainsi que des piles de plaques (3, 4) définissant la hauteur de travail de l'outil et qui est maintenue par la tête de bridage (50), caractérisée en ce que la cage (1) est conçue de forme parallélépipédique avec des parois latérales planes (7) qui déterminent la hauteur de la cage (1); en ce que la cage (1) présente au moins une fente longitudinale (18, 24, 25) qui permet de dilater élastiquement au moins une paroi latérale (21) de la cage (1); et en ce que l'outil (2, 28) et les piles de plaques (3, 4) sont introduits dans la cage (1) lorsque la paroi latérale (21) est à l'etat dilaté; et en ce que la force de rappel de la paroi latérale (21) produit, pour bloquer les piles de plaques (4) avec l'outil (2, 28), une force de bridage permettant d'usiner l'outil (2, 28).

3. Fixation selon la revendication 2, caractérisée en ce que la fente longitudinale (18, 24, 25) s'ouvre d'un côté frontal (22, 23).

4. Fixation selon la revendication 2 ou 3, caractérisée en ce que la direction de fente (24, 25) fait un angle aigu avec l'axe longitudinal de la monture.

5. Fixation selon l'une des revendications 2 à 4, caractérisée par des ouvertures (30) dans la paroi (21), des deux côtés de la fente longitudinale (24, 25), pour l'accrochage de broches (45, 46), ayant une conicité contraire au sens d'extraction, d'un outil extérieur d'expansion.

6. Fixation selon la revendication 5, caractérisée en ce que les ouvertes (30) sont également exécutées avec une conicité contraire à leur sens d'extraction.

7. Fixation selon l'une des revendications 1 à 6, caractérisée en ce que la cage (1) est en un materiau doux ferromagnétique et en ce que des aimants (56) sont insérés, au ras de la surface, dans des surfaces d'appui (54) de la tête de bridage (50).

0 102 375

Fig.1

Fig.2

Fig.3

7

Fig. 7

Fig.4

Fig. 5

Fig.6